Europäisches Patentamt

European Patent Office

Office européen des brevets

(19)

(11) Veröffentlichungsnummer : **0 367 022 B1**

(12)
# EUROPÄISCHE PATENTSCHRIFT

(45) Veröffentlichungstag der Patentschrift :
**16.12.92 Patentblatt 92/51**

(51) Int. Cl.$^5$ : **B29C 47/16**

(21) Anmeldenummer : **89119324.5**

(22) Anmeldetag : **18.10.89**

(54) **Verstellbare Extrusionsschlitzdüse.**

(30) Priorität : **04.11.88 DE 8813801 U**

(43) Veröffentlichungstag der Anmeldung :
**09.05.90 Patentblatt 90/19**

(45) Bekanntmachung des Hinweises auf die
Patenterteilung :
**16.12.92 Patentblatt 92/51**

(84) Benannte Vertragsstaaten :
**AT BE CH DE ES FR GB IT LI NL SE**

(56) Entgegenhaltungen :
**DE-A- 2 305 877**
**DE-B- 1 234 015**
**DE-C- 841 536**
**US-A- 3 292 211**
**US-A- 3 813 204**
**US-A- 4 470 790**
**US-A- 4 704 083**

(73) Patentinhaber : **Röhm GmbH**
**Kirschenallee Postfach 4242**
**W-6100 Darmstadt 1 (DE)**

(72) Erfinder : **Lorenz, Hans**
**Brentanostrasse 16**
**W-6100 Darmstadt (DE)**

EP 0 367 022 B1

## Beschreibung

Die Erfindung betrifft eine Extrusions-Schlitzdüse mit flexibler Lippe und einer Vielzahl von Stellgliedern, die zur Regulierung der Schlitzweite auf die Lippe einwirken, zum Extrudieren von flachen Bahnen, insbesondere Folien, aus thermoplastischem Kunststoff. Solch eine Extrusions-Schlitzdüse ist in der US-A- 3 292 211 beschrieben.

Stand der Technik

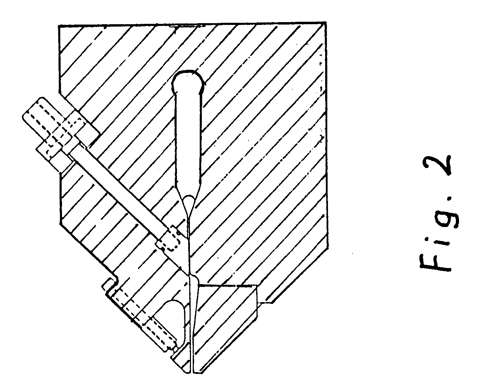

Extrusions-Schlitzdüsen mit flexibler Lippe enthalten, wie aus Figur 2 ersichtlich, einen verhältnismäßig langen Lippenabschnitt, der infolge einer geringen Dicke elastisch ist und eine Veränderung der Schlitzweite durch Stellglieder, die auf die Lippe einwirken, zuläßt. Im vorderen Teil der Lippe, wo die Stellglieder einwirken, ist die Lippe verdickt, um die Krafteinleitung von den Stellgliedern zu ermöglichen. In der Praxis beträgt die Dicke der Lippe in diesem Bereich stets mehr als 20 mm, wodurch ihre Flexibilität erheblich eingeschränkt wird.

Wegen der stellenweise sehr dicken Lippen sind bei den bekannten Extrusionsschlitzdüsen die Möglichkeiten der Feinsteuerung der Lippenweite begrenzt. Namentlich an den Seiten der Düse neigt die aus der Düse austretende Bahn infolge der Schmelzeelastizität zu einer Breitenkontraktion unter Verdickung, der man nur durch eine Verminderung der Schlitzweite an den Seiten entgegenwirken kann.

Auch an jeder anderen Stelle der Düse kann es - beispielsweise durch Ungenauigkeiten der Temperaturführung - zu örtlichen Dickenschwankungen der extrudierten Bahn kommen, die durch eine Gegensteuerung der Schlitzweite ausgeglichen werden muß. Die Steifigkeit des vorderen Lippenbereichs setzt dieser Feinsteuerung Grenzen.

Aufgabe und Lösung

Ziel der Erfindung ist eine Verbesserung der Steuerbarkeit der Schlitzhöhe. Dieses Ziel wird durch eine Extrusions-Schlitzdüse mit den Merkmalen gemäß Anspruch 1 erreicht, ohne die Zahl oder den Abstand der aktiven Stellglieder zu verändern.

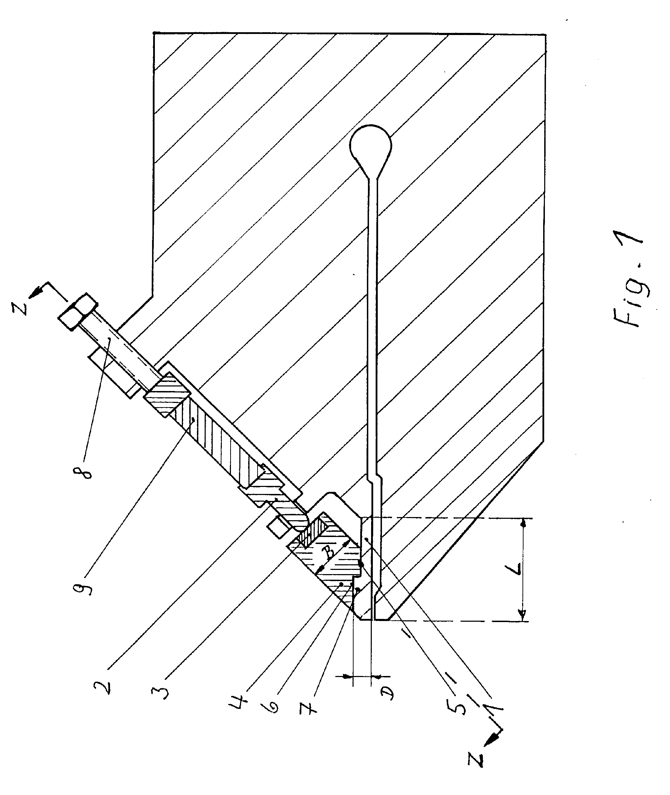

Die Erfindung wird anhand der Figuren 1 und 2 näher erläutert.

**Figur 1** stellt einen Längsschnitt durch die Extrusions-Schlitzdüse der Erfindung dar.

**Figur 2** zeigt zum Vergleich einen Längsschnitt durch eine bekannte Gestaltung einer Extrusionsschlitzdüse mit flexibler Lippe.

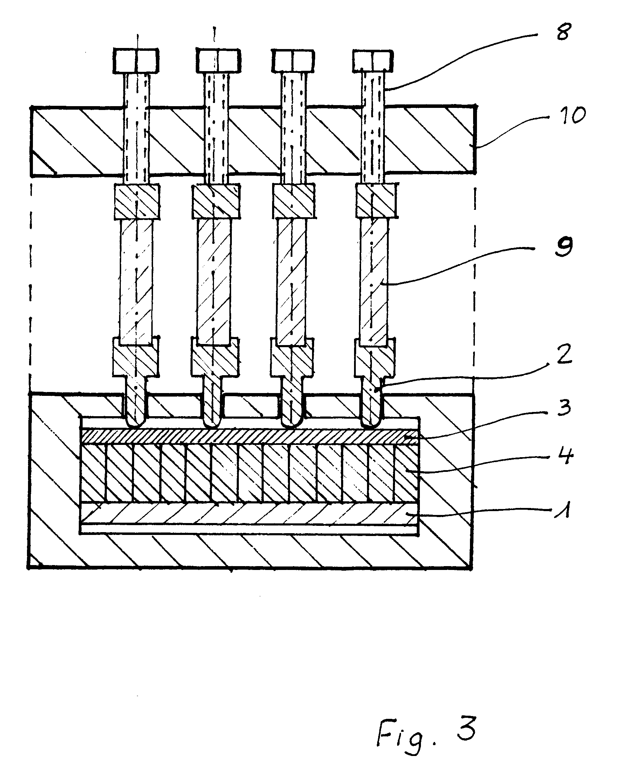

**Figur 3** ist ein Querschnitt durch die Vorrichtung gemäß Figur 1 längs der Linie Z-Z.

Wirkungsweise der Erfindung

Erfindungsgemäß wirkt die Stellkraft der Stellglieder (2) auf ein flexibles Band (3) ein und wird von diesem über die Lamellen (4) auf die flexible Lippe (1) übertragen. Die Lamellen (4) sind in Richtung der Stellkraft gegeneinander verschiebbar angeordnet und stehen mit ihrer Bodenfläche (5) in kraftschlüssigem Eingriff mit der flexiblen Lippe (1).

Das flexible Band (3) verteilt die von einem einzelnen Stellglied (2) ausgehende Stellkraft auf mehrere Lamellen (4), wobei die Stellkraft infolge der Elastizität des Bandes mit wachsendem Abstand vom Angriffspunkt abnimmt. Die Lamellen geben die von einem einzelnen Stellglied ausgehende Stellkraft an einen größeren Abschnitt der Lippe weiter. Dies gilt sowohl in der Längsrichtung wie in der Querrichtung. Die gleichmäßigere Verteilung der Stellkraft läßt es zu, die Lippe auf ihrer ganzen Länge L so flexibel zu gestalten, daß sie sich in verhältnismäßig eng begrenzten Bereichen fein regulieren läßt.

Bevorzugte Ausführungsform der Erfindung

Das Band (3) kann aus einem Flachband aus Stahl bestehen und soll eine solche Elastizität besitzen, daß es die von einem Stellglied ausgehende Stellkraft auf mehrere Lamellen überträgt, aber durch ein einzelnes Stellglied wirksam verformt werden kann. Bei einem Abstand der Stellglieder von 10 bis 40 mm eignet sich beispielsweise ein Stahlband unter 20 mm Dicke, z.B. 0,5 bis 10, vorzugsweise 0,5 bis 5 mm Dicke und 6 bis 30 mm Breite. Vorzugsweise wird ein über die ganze Breite der Düse durchgehendes Band verwendet.

Die Elastizität des Bandes (3) soll mit der der Lippe (1) in zweckmäßiger Weise korrespondieren und die erforderliche Feinsteuerung zulassen. Es ist vorteilhaft, wenn die flexible Lippe (1) auf ihrer ganzen Länge L eine Dicke D von weniger als 20 mm, z.B. 3 bis 10 mm hat.

Für die möglichst gleichförmige Einleitung der Stellkraft auf die Lippe ist die Gestaltung der Lamellen (4) von wesentlicher Bedeutung. In der Regel wirkt die Stellkraft in einem spitzen Winkel auf die Lippe (1) ein. Daher stehen auch die Bodenfläche (5) und die Berührungsfläche der Lamelle zu dem Band (3) winklig zu einander. Eine formschlüssige Verbindung zwischen den Lamellen und der Lippe wird durch eine Stufe (6) oder einen Grat an der Lippenaußenseite und eine korrespondierende Stufe (7) oder Nut in der Bodenfläche (5) der Lamellen erreicht.

Die Abmessungen der Lamellen werden als Höhe, Breite und Dicke bezeichnet. Die Höhe ist die Erstreckung in Richtung der Stellkraft; sie ist nicht kritisch, solange sie zur Übertragung der Stellkraft ohne Verformung der Lamelle selbst ausreicht. Die Breite B ist vorzugsweise so groß, daß die Bodenfläche (5) der Lamellen mehr als die Hälfte der Länge L der Lippe (1) überdeckt. Als Dicke der Lamellen (4) wird ihre Erstreckung in Längsrichtung der Lippe bzw. quer zur Extrusionsrichtung verstanden. Die Dicke entspricht höchstens der Breite der Bereiche, für die eine Feinsteuerung erwünscht ist. In der Regel ist die Dicke einer Lamelle deutlich geringer als die Länge der auf die Lippe einwirkenden Bodenfläche (5) und als die Breite B. Vorzugsweise ist die Zahl der Lamellen (4) größer als die Zahl der Stellglieder (2) und die Lamellen (3) wenigstens zum Teil schmäler als der Abstand der Stellglieder (2). Eine Dicke unter 10 mm ist vorteilhaft. Sie können beispielsweise aus Stahlblech von 1 bis 5 mm Dicke gefertigt sein.

Es ist bevorzugt, aber nicht unerläßlich, daß die Stellglieder über die ganze Breite der Düse in gleichmäßigen Abständen beispielsweise 10 bis 40 mm angeordnet sind und alle Lamellen die gleiche Dicke haben. Wenn hauptsächlich an den Seiten der Düse eine Feinsteuerung der Schlitzweite angestrebt wird, genügt es, daß dort die Stellglieder möglichst eng angeordnet und ihre Stellkraft mittels einer Anzahl von Lamellen auf den entsprechenden Lippenabschnitt übertragen wird, die größer als die Zahl der Stellglieder in diesem Bereich ist.

Als Stellglieder (2) eignen sich übliche Schraubbolzen, die beispielsweise an einem Sechskantkopf mit einem Stellschlüssel oder motorisch verstellt werden können. Bevorzugt werden thermische Dehnbolzen oder Piezotranslatoren verwendet. Bei der Ausführungsform gemäß Figur 1 dient zur Grobeinstellung ein Schraubbolzen (8), während die Feineinstellung mittels des Dehnbolzens (9) bewirkt wird. Durch eine regelbare elektrische Beheizung wird der Dehnbolzen durch thermische Dehnung auf die erforderliche Länge eingestellt. Die Bolzenheizung läßt sich über eine automatisierte Dickenmessung der erzeugten Bahn selbsttätig regeln.

Anwendung der Erfindung

Naturgemäß hat die Erfindung die größe Bedeutung für Extrusionsanlagen zur Herstellung von Bahnen aus thermoplastischem Kunststoff mit besonders hohen Anforderungen an die Dickentoleranz. Zwar lassen sich Ungleichmäßigkeiten der extrudierten Bahn in manchen Fällen durch ein der Extrusion nachgeschaltetes Walzenglättwerk beseitigen, jedoch ist es bei dünnen Bahnen wegen der schnellen Abkühlung unter die Erweichungstemperatur schwierig, auf diese Weise eine Dickenkorrektur zu erreichen. Die Erfindung wird daher vorzugsweise bei Extrusionsdüsen mit einer Schlitzhöhe unter 5 mm, insbesondere Foliendüsen mit Schlitzweiten von 0,2 bis 1 mm angewendet. Thermoplastische Kunststoffe, die mit den erfindungsgemäßen Düsen mit Vorteil extrudiert werden können, sind z.B. Polymethylmethacrylat, Polycarbonate, Polyester, Polysulfone und Polyäthersulfone.

## Patentansprüche

1. Extrusions-Schlitzdüse zum Extrudieren von flachen Bahnen aus thermoplastischem Kunststoff mit flexibler Lippe (1) und einer Vielzahl von Stellgliedern (2), die zur Regulierung der Schlitzweite auf die Lippe einwirken,
gekennzeichnet
durch ein flexibles Band (3), auf das die Stellglieder (2) einwirken, und eine Mehrzahl von zwischen dem Band (3) und der flexiblen Lippe (1) beweglich angeordneten Lamellen (4) zur Einleitung der Stellkraft von dem flexiblen Band (3) auf die Lippe (1).

2. Extrusions-Schlitzdüse nach Anspruch 1, dadurch gekennzeichnet, daß die Lamellen (4) mehr als die Hälfte der Länge L der flexiblen Lippe (1) überdecken und mit ihrer Bodenfläche (5) mit der flexiblen Lippe (1) in formschlüssigem Eingriff stehen.

3. Extrusions-Schlitzdüse nach Anspruch 2, dadurch gekennzeichnet, daß wenigstens ein Teil der Lamellen (4) eine Dicke hat, die geringer als ihre Breite B ist.

4. Extrusions-Schlitzdüse nach einem oder mehreren der Ansprüche 1 bis 3, dadurch gekennzeichnet, daß die Zahl der Lamellen (4) größer als die Zahl der Stellglieder (2) ist.

5. Extrusions-Schlitzdüse nach einem oder mehreren der Ansprüche 1 bis 4, dadurch gekennzeichnet, daß die Lamellen (4) wenigstens zum Teil dünner als der Abstand der Stellglieder (2) sind.

6. Extrusions-Schlitzdüse nach einem oder mehreren der Ansprüche 1 bis 5, dadurch gekennzeichnet, daß die flexible Lippe (1) auf ihrer ganzen Länge L eine Dicke D von weniger als 15, vorzugsweise weniger als 10 mm hat.

7. Extrusions-Schlitzdüse nach einem oder mehreren der Ansprüche 1 bis 6, dadurch gekennzeichnet, daß das flexible Band (3) eine Dicke von 0,5 bis 20, vorzugsweise 0,5 bis 10 mm hat.

8. Extrusions-Schlitzdüse nach einem oder mehreren der Ansprüche 1 bis 7, gekennzeichnet durch eine Schlitzweite unter 5 mm.

## Claims

1. An extrusion-slot die for extruding flat sheets made of thermoplastic plastics, having a flexible lip (1) and a plurality of adjusting members (2) which act upon the lip in order to control the slot width, characterised by a flexible belt (3) acted upon by the adjusting members (2), and a plurality of laminae (4) movably arranged between the belt (3) and the flexible lip (1) to introduce the positioning force from the flexible belt (3) onto the lip (1).

2. An extrusion-slot die according to claim 1, characterised in that the laminae (4) cover more than half the length L of the flexible lip (1) and are in positive engagement with the flexible lip (1), by means of their bottom face (5).

3. An extrusion-slot die according to claim 2, characterised in that at least a portion of the laminae (4) has a thickness which is less than the width B thereof.

4. An extrusion-slot die according to any one or more of claims 1 to 3, characterised in that the number of laminae (4) is greater than the number of adjusting members (2).

5. An extrusion-slot die according to any one or more of claims 1 to 4, characterised in that the laminae (4) are, at least partly, thinner than the spacing between the adjusting members (2).

6. An extrusion-slot die according to any one or more of claims 1 to 5, characterised in that the flexible lip (1) has, over its entire length L, a thickness D of less than 15, preferably less than 10 mm.

7. An extrusion-slot die according to any one or more of claims 1 to 6, characterised in that the flexible belt (3) has a thickness of 0.5 to 20, preferably 0.5 to 10 mm.

8. An extrusion-slot die according to any one or more of claims 1 to 7, characterised by a slot width of less than 5 mm.

## Revendications

1. Filière plate d'extrusion pour l'extrusion de produits continus plats en matière thermoplastique, comportant une lèvre flexible (1) et une multiplicité d'organes de réglage (2) qui agissent sur la lèvre pour régler la largeur de la fente, caractérisée par un ruban flexible (3), sur lequel agissent les organes de réglage (2), et par une multiplicité de lamelles (4), disposées de façon mobile entre le ruban (3) et la lèvre flexible (1), pour transmettre la force de réglage du ruban flexible (3) à la lèvre (1).

2. Filière plate d'extrusion selon la revendication 1, caractérisée en ce que les lamelles (4) couvrent plus de la moitié de la longueur L de la lèvre flexible et sont en prise par emboîtement, par leur surface inférieure (5), avec la lèvre flexible (1).

3. Filière plate d'extrusion selon la revendication 2, caractérisée en ce que, pour une partie au moins, les lamelles (4) ont une épaisseur qui est plus petite que leur largeur B.

4. Filière plate d'extrusion selon l'une quelconque des revendications 1 à 3, caractérisée en ce que le nombre des lamelles (4) est plus grand que le nombre des organes de réglage (2).

5. Filière plate d'extrusion selon l'une quelconque des revendications 1 à 4, caractérisée en ce que, pour une partie au moins, les lamelles (4) sont plus minces que l'écart entre les organes de réglage (2).

6. Filiere plate d'extrusion selon l'une quelconque des revendications 1 à 5, caractérisée en ce que la lèvre flexible (1) a, sur toute sa longueur L, une épaisseur D de moins de 15, de préférence de moins de 10 mm.

7. Filière plate d'extrusion selon l'une quelconque des revendications 1 à 6, caractérisée en ce que le ruban flexible (3) a une épaisseur de 0,5 à 20, de préférence de 0,5 à 10 mm.

8. Filière plate d'extrusion selon l'une quelconque des revendications 1 à 7, caractérisée par une largeur de fente inférieure à 5 mm.

Fig. 1

EP 0 367 022 B1

Fig. 2

Fig. 3